# FASCICULE DE BREVET EUROPEEN

(11) **EP 3 864 675 B1**
(45) Date de publication et mention de la délivrance du brevet: **28.08.2024**
(21) Numéro de dépôt: 18847189.0
(22) Date de dépôt: 09.10.2018
(51) Int. Cl.: G21C 3/62, C01G 43/025, G21C 19/48, G21C 21/00

(54) **PROCÉDÉ ET INSTALLATION DE CONVERSION D'HEXAFLUORURE D'URANIUM EN DIOXYDE D'URANIUM**
VERFAHREN UND ANLAGE ZUR UMWANDLUNG VON URANHEXAFLUORID IN URANDIOXID
PROCESS AND FACILITY FOR CONVERTING URANIUM HEXAFLUORIDE INTO URANIUM DIOXIDE

(43) Date de publication de la demande: 18.08.2021
(73) Titulaire: Framatome, 92400 Courbevoie (FR)
(72) Inventeur: FEUGIER, André, 26300 Chatuzange le Goubet (FR); MESONA, Bruno, 26320 Saint Marcel Les Valence (FR)
(74) Mandataire: Lavoix
(86) Numéro de dépôt international: PCT/FR2018/052497
(87) Numéro de publication internationale: WO 2020/074792

(56) Documents cités:
- US-A- 3 698 697
- US-A- 6 136 285
- US-B1- 7 824 640

## Description

La présente invention concerne le domaine de la production de poudre de dioxyde d'uranium (UO₂), destinée notamment à la fabrication de pastilles d'UO₂ pour crayons de combustible nucléaire.

Il est possible d'enrichir de l'uranium sous forme d'hexafluorure d'uranium (UF₆). Il est cependant nécessaire ensuite de convertir l'UF₆ en UO₂ pour fabriquer des pastilles d'UO₂.

Pour ce faire, il est possible de convertir de l'UF₆ gazeux en oxyfluorure d'uranium (UO₂F₂) par hydrolyse dans un réacteur, en injectant de l'UF₆ gazeux et de la vapeur d'eau sèche dans le réacteur pour obtenir de la poudre d'UO₂F₂, puis de convertir la poudre d'UO₂F₂ en poudre d'UO₂ par pyrohydrolyse dans un four, en faisant circuler la poudre d'UO₂F₂ dans le four et en injectant de la vapeur d'eau sèche et du dihydrogène (H₂) gazeux dans le four.

Pour obtenir une poudre d'UO₂ de qualité homogène, le four peut être muni de moyens permettant un brassage énergique de la poudre d'UO₂F₂ et favorisant le contact de la poudre d'UO₂F₂ avec le dihydrogène et la vapeur d'eau.

Un coproduit résultant des conversions successives UF₆ → UO₂F₂ → UO₂ est le fluorure d'hydrogène (HF) gazeux qui est très toxique et corrosif.

La réaction d'hydrolyse est réalisée sous atmosphère de gaz neutre (ou gaz inerte), de préférence sous atmosphère d'azote. Pour ce faire, du gaz neutre est injecté dans le réacteur en formant un flux gazeux balayant le réacteur.

En phase de production, pour éviter une surpression dans l'installation de conversion, le gaz neutre, les gaz réactifs en excès et le fluorure d'hydrogène résultant de la conversion peuvent être évacués au travers de filtres destinés à retenir les particules en suspension, notamment les particules d'UO₂F₂ et d'UOz.

Les filtres se colmatent progressivement et peuvent être décolmatés régulièrement par injection de gaz neutre à contre-courant.

Pour éviter la formation d'agglomérats de poudre sur la paroi interne du four de pyrohydrolyse, l'installation de conversion peut être munie d'organes de percussion qui viennent frapper contre la paroi extérieure du four.

US6136285 divulgue une telle installation de conversion d'UF₆ en UO₂ pour la mise en oeuvre d'un tel procédé de conversion.

Dans un tel procédé de conversion, l'UO₂ est généré sous la forme de poudre frittable permettant de former des pastilles d'UO₂ par frittage.

Il est difficile d'obtenir, de manière constante au cours du temps, une poudre d'UO₂ de qualité, c'est-à-dire présentant des caractéristiques satisfaisantes notamment en termes de masse volumique apparente, de surface spécifique, de granulométrie et de composition chimique.

Pour satisfaire aux exigences d'une utilisation pour l'industrie nucléaire, une poudre d'UO₂ destinée à former des pastilles d'UO₂ doit être homogène. Elle doit présenter un taux d'impuretés (essentiellement fluor) le plus faible possible et de préférence inférieur à 50 ppm (50 µg/g d'UO₂₎, une surface spécifique comprise entre 1 m²/g et 4 m²/g, un rapport oxygène / uranium compris entre 1,80 et 2,50 % et une humidité relative inférieure à 1 %. Elle doit présenter une bonne capacité de mélange et une aptitude à l'écoulement spontané (coulabilité) permettant ainsi de supporter des cadences de production de pastilles élevées. De préférence, elle possède en sus une distribution granulométrique homogène (loi normale) et une réactivité au frittage naturel (ou frittabilité) permettant d'obtenir sur la pastille céramique frittée une densité supérieure à 96,5% de la masse volumique théorique de l'UO₂ et une dureté supérieure à 15 daN/m.

L'obtention d'une poudre d'UO₂ de qualité constante nécessite un réglage précis des paramètres de fonctionnement de l'installation de conversion, notamment des débits et températures d'injection des différents produits réactifs et des conditions, notamment de la température, de l'hydrolyse et de la pyrohydrolyse, comme cela est enseigné dans US6136285, US4112055, US3845193 et US7824640.

US3698697A divulgue un procédé de conversion par hydrolyse d'UF₆ en présence de vapeur d'eau puis pyrohydrolyse de l'UO₂F₂ obtenu en présence de vapeur d'eau et de dihydrogène.

Un des buts de l'invention est de proposer un procédé de conversion d'UF₆ en UO₂ stable permettant d'obtenir de la poudre d'UO₂ de qualité constante et bien définie.

A cet effet, l'invention propose un procédé de conversion selon la revendication 1.

Des caractéristiques optionnelles du procédé de conversion sont définies aux revendications 2 à 15.

L'invention concerne aussi une installation de conversion selon la revendication 16.

Un mode de réalisation particulier de l'installation de conversion est défini à la revendication 17.

L'invention et ses avantages seront mieux compris à la lecture de la description qui va suivre, donnée uniquement à titre d'exemple et faite en référence aux dessins annexés, sur lesquels :
- la Figure 1 est une vue schématique d'une installation de conversion pour la conversion d'UF₆ en UO₂ ;
- la Figure 2 est une vue schématique d'un dispositif de percussion pour percuter le four de pyrohydrolyse ; et
- la Figure 3 est une vue schématique d'un dispositif d'émission d'UF₆ gazeux pour l'alimentation en continu du réacteur d'hydrolyse.

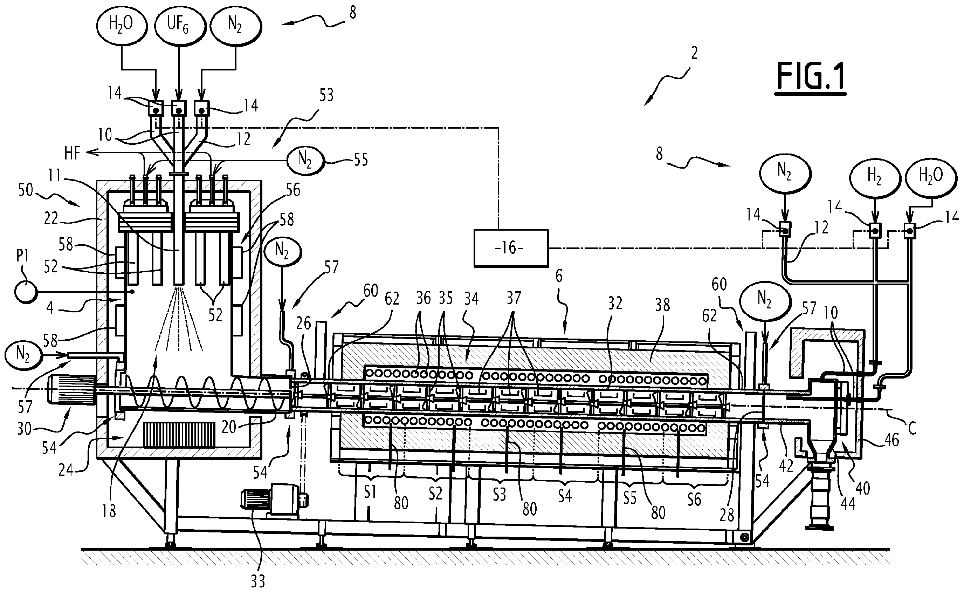

L'installation de conversion 2 illustrée sur la Figure 1 comprend un réacteur 4 d'hydrolyse pour la conversion d'UF₆ en poudre d'UO₂F₂, par réaction entre de l'UF₆ gazeux et de la vapeur d'eau sèche injectés dans le réacteur 4.

L'installation de conversion 2 comprend un four 6 de pyrohydrolyse pour la conversion de la poudre d'UO₂F₂ fournie par le réacteur 4 en poudre d'UO₂, par réaction de la poudre d'UO₂F₂ avec de la vapeur d'eau sèche et de l'H₂ gazeux injectés dans le four 6.

L'installation de conversion 2 comprend un dispositif d'alimentation 8 configuré pour injecter les gaz réactifs (UF₆ gazeux, vapeur d'eau sèche et H₂ gazeux) dans le réacteur 4 et dans le four 6.

Le dispositif d'alimentation 8 est alimenté à partir de sources de gaz réactifs, comprenant au moins une source d'UF₆ gazeux, au moins une source de vapeur d'eau sèche et au moins une source d'H₂ gazeux.

Le dispositif d'alimentation 8 comprend des conduits d'injection de réactif 10 pour l'injection des gaz réactifs dans le réacteur 4 et dans le four 6. Les conduits d'injection de réactif 10 comprennent un conduit d'injection d'UF₆ alimentant le réacteur 4, un premier conduit d'injection de vapeur alimentant le réacteur 4, un deuxième conduit d'injection de vapeur alimentant le four 6 et un conduit d'injection d'H₂ alimentant le four 6.

Le dispositif d'alimentation 8 est en outre configuré pour l'injection d'un gaz neutre dans le réacteur 4, en particulier en phase de production de l'installation de conversion 2, de façon que la conversion d'UF₆ en UO₂F₂ s'effectue sous une atmosphère de gaz neutre. Dans ce cas, de préférence, le dispositif d'alimentation 8 est configuré pour permettre l'injection de gaz neutre dans le réacteur 4 sans injecter de gaz neutre dans le four 6.

Le gaz neutre injecté dans le réacteur 4 en phase de production pour la réalisation de la conversion d'UF₆ en UO₂F₂ est nommé « gaz neutre de balayage » par la suite.

Le dispositif d'alimentation 8 est de préférence configuré pour l'injection du gaz neutre de balayage conjointement avec la vapeur d'eau sèche (H₂O) et l'UF₆.

Pour ce faire, comme dans l'exemple illustré, le dispositif d'alimentation 8 comprend par exemple un injecteur concentrique 11 permettant d'injecter la vapeur d'eau sèche (H₂O), l'UF₆ et le gaz neutre de balayage de manière concentrique, i.e. en formant trois jets d'injection concentriques.

De préférence, le dispositif d'alimentation 8 est en outre configuré pour l'injection de gaz neutre dans le réacteur 4 et dans le four 6, de façon à pouvoir maintenir une atmosphère de gaz neutre dans le réacteur 4 et dans le four 6 lorsque l'installation de conversion 2 n'est pas en phase de production.

Ainsi, en phase de production, le dispositif d'alimentation 8 injecte du gaz neutre de balayage dans le réacteur 4 pour réaliser la conversion d'UF₆ en UO₂F₂ sous une atmosphère de gaz neutre, sans injecter de gaz neutre dans le four 6, et, en phase de mise à l'arrêt et de démarrage, le dispositif d'alimentation 8 injecte du gaz neutre dans le réacteur 4 et dans le four 6 pour maintenir une atmosphère de gaz neutre.

Le dispositif d'alimentation 8 comprend un ou plusieurs conduits d'injection de gaz neutre 12 pour l'injection de gaz neutre dans le réacteur 4 et/ou dans le four 6. Chaque conduit d'injection de gaz neutre 12 est alimenté à partir d'une source de gaz neutre. Le gaz neutre est de préférence de l'azote (N₂).

Dans l'exemple illustré, l'injecteur concentrique 11 est alimenté par le conduit d'injection de réactif 10 alimentant le réacteur 4 en vapeur d'eau (H₂O), par le conduit d'injection de réactif 10 alimentant le réacteur 4 en UF₆, et par un conduit d'injection de gaz neutre 12, pour l'injection du gaz neutre de balayage dans le réacteur 4. En option, le dispositif d'alimentation 8 est configuré pour l'alimentation du conduit d'injection de réactif 10 alimentant le réacteur 4 en vapeur d'eau (H₂O) et/ou du conduit d'injection de réactif 10 alimentant le réacteur 4 en UF₆ avec du gaz neutre lors d'une mise à l'arrêt ou d'un démarrage de l'installation de conversion 2.

Le dispositif d'alimentation 8 comprend un actionneur d'alimentation 14 respectif disposé à l'entrée de chaque conduit d'injection de réactif 10 ou de gaz neutre 12, l'actionneur d'alimentation 14 permettant de commander l'écoulement du gaz dans le conduit d'injection.

De préférence, les actionneurs d'alimentation 14 sont prévus sous la forme de régulateurs de débits, propres à maintenir le débit de gaz les traversant à une valeur de consigne.

De préférence et afin d'éviter tout risque de fuite d'UF₆, les actionneurs d'alimentation 14 du dispositif d'alimentation 8 sont résistants aux sollicitations sismiques.

L'installation de conversion 2 comprend un système de pilotage 16 électronique pour piloter l'installation de conversion 2 et notamment le dispositif d'alimentation 8, en particulier les actionneurs d'alimentation 14.

Tel qu'illustré sur la Figure 1, le réacteur 4 délimite une chambre de réaction 18 dans laquelle débouchent les conduits d'injection de réactif 10 alimentant le réacteur 4 en UF₆ gazeux et en vapeur d'eau sèche, et dans laquelle se produit la conversion de l'UF₆ en UO₂F₂ par hydrolyse. L'UO₂F₂ ainsi obtenu se présente sous la forme d'une poudre tombant au fond de la chambre de réaction 18.

Le réacteur 4 possède une tubulure de sortie 20 s'étendant à partir de la chambre de réaction 18 et raccordée au four 6 pour transférer la poudre d'UO₂F₂ du fond de la chambre de réaction 18 vers le four 6.

L'installation de conversion 2 comprend une enceinte thermique 22 entourant le réacteur 4 et un dispositif de chauffage 24 pour chauffer le volume interne de l'enceinte thermique 22 et donc le réacteur 4.

Le four 6 possède une entrée 26 raccordée à la tubulure de sortie 20 du réacteur 4 pour recevoir la poudre d'UO₂F₂ et une sortie 28 pour fournir la poudre d'UOz.

L'installation de conversion 2 comprend un dispositif de transfert 30 pour transférer la poudre d'UO₂F₂ de la chambre de réaction 18 vers le four 6. Le dispositif de transfert 30 comprend ici une vis sans fin motorisée entraînée par un moteur pour pousser la poudre d'UO₂F₂ de la chambre de réaction 18 vers l'entrée 26 du four 6.

Le four 6 comprend un tambour 32 présentant un axe central C, dont une extrémité axiale forme l'entrée 26 et l'extrémité axiale opposée forme la sortie 28 du four 6.

Le tambour 32 est prévu pour la circulation de la poudre d'UO₂F₂ de l'entrée 26 vers la sortie 28 avec circulation de vapeur d'eau sèche et d'H₂ dans le four 6 à contre-courant de la poudre d'UO₂F₂.

Le tambour 32 est monté rotatif autour de son axe central C incliné par rapport à l'horizontale de sorte que l'entrée 26 est plus élevée que la sortie 28, la rotation du tambour 32 provoquant l'avancée de la poudre de l'entrée 26 vers la sortie 28.

Le four 6 comprend un dispositif d'entraînement en rotation 33 motorisé configuré pour l'entraînement du tambour 32 en rotation autour de son axe central C. Le dispositif d'entraînement en rotation 33 comprend par exemple un moteur et un dispositif de transmission, par exemple à chaîne ou à courroie, couplant le moteur au tambour 32.

En option, le four 6 est avantageusement muni d'une manivelle qui permet de faire tourner le tambour 32 manuellement en cas de défaillance du dispositif d'entraînement en rotation 33.

Le tambour 32 est de préférence muni de chicanes 35 disposées à l'intérieur du tambour 32 pour contrôler l'écoulement des gaz réactifs et le temps de passage de la poudre dans le four 6.

En option, le tambour 32 est muni d'organes de relevage 37 disposés en saillie sur la surface interne du tambour 32 et configurés pour soulever et faire retomber la poudre présente dans le tambour 32 du fait de la rotation du tambour 32 autour de l'axe central C, pour améliorer le mélange de la poudre et favoriser une mise en contact homogène des particules de poudre avec les gaz réactifs circulant dans le tambour 32. Les organes de relevage 37 se présentent par exemple sous la forme d'aubes de relevage ou de cornières de relevage réparties sur la surface interne du tambour 32.

Dans un mode de réalisation avantageux, le tambour 32 du four 6 et le dispositif de transfert 30 de la chambre de réaction 18 sont configurés pour fonctionner indépendamment l'un de l'autre, en particulier pour permettre l'arrêt de l'un tout en maintenant le fonctionnement de l'autre.

Dans l'exemple illustré, le tambour 32 du four 6 et le dispositif de transfert 30 de la chambre de réaction 18 sont configurés pour une rotation indépendante de la vis sans fin du dispositif de transfert 30, d'une part, et du tambour 32, d'autre part, et en particulier pour l'arrêt de la rotation de l'un parmi la vis sans fin et le tambour 32 tout en maintenant la rotation de l'autre.

Cette disposition permet, dans les phases de mise à l'arrêt de l'installation de conversion 2, de finir d'évacuer la poudre d'UO₂ du four 6 alors que le réacteur 4, et notamment le dispositif de transfert 30, est déjà à l'arrêt.

Dans l'exemple illustré, le deuxième conduit d'injection de vapeur et le conduit d'injection de H₂ alimentent le tambour 32 par la sortie 28 pour la circulation de la vapeur d'eau sèche de pyrohydrolyse et de l'H₂ de la sortie 28 vers l'entrée 26 du four 6.

Dans l'exemple illustré, un conduit d'injection de gaz neutre 12 est relié au conduit d'injection de réactif 10 pour l'injection de H₂ dans le four 6 et/ou au conduit d'injection de réactif 10 pour l'injection de H₂O dans le four 6, de manière à injecter du gaz neutre dans le four 6 via ce(s) conduit(s) d'injection de réactif 10 lors de la mise à l'arrêt ou du démarrage de l'installation de conversion 2, le gaz neutre injecté circulant alors de la sortie 28 du four 6 vers l'entrée 26 du four 6. En option ou en variante, le dispositif d'alimentation 8 comprend un conduit d'injection de gaz neutre 12 pour l'injection de gaz neutre dans le four 6 qui débouche directement dans le four 6 sans passer par l'intermédiaire d'un conduit d'injection de réactif 10.

L'alimentation d'un conduit d'injection de réactif 10 en gaz neutre lors de la mise à l'arrêt de l'installation de conversion 2 permet de purger ce conduit d'injection de réactif 10 lors de la mise à l'arrêt tout en injectant le gaz neutre. L'alimentation d'un conduit d'injection de réactif 10 en gaz neutre lors d'un démarrage permet la montée en température de l'installation de conversion 2 et l'alimentation de l'installation de conversion 2 en réactifs lorsque les paramètres de la réaction sont atteints dans le réacteur 4, respectivement le four 6.

Le four 6 comprend un dispositif de chauffage 34 pour chauffer le tambour 32. Le dispositif de chauffage 34 comprend des éléments chauffants 36 entourant le tambour 32 et répartis le long du tambour 32. Le four 6 comprend une enceinte thermique 38 entourant le tambour 32 et les éléments chauffants 36.

L'installation de conversion 2 comprend un dispositif de collecte 40 pour collecter la poudre à la sortie du four 6. Le dispositif de collecte 40 comprend une tubulure d'entrée 42 raccordée à la sortie 28 du four 6 et débouchant dans un récipient de collecte 44. Le dispositif de collecte 40 comprend une enceinte thermique 46 entourant le récipient de collecte 44. Le deuxième conduit d'injection de vapeur et le conduit d'injection d'H₂ débouchent de préférence dans le récipient de collecte 44.

L'installation de conversion 2 comprend un dispositif de captage 50 pour capter et évacuer les gaz remontant dans le réacteur 4, comprenant les gaz réactifs en excès, du fluorure d'hydrogène (HF) résultant de la conversion et le gaz neutre.

Le dispositif de captage 50 est disposé dans le réacteur 4, de préférence dans une région supérieure de la chambre de réaction 18.

Le dispositif de captage 50 comprend une pluralité de filtres 52 pour retenir les matières solides pouvant être entraînées par les gaz remontant dans le réacteur 4, notamment des particules d'UO₂F₂, voire d'UO₂.

Les filtres 52 sont par exemple constitués d'un matériau poreux permettant le passage des gaz réactifs en excès, du gaz neutre et de l'HF résultant de la réaction de conversion de l'UF₆ en UO₂F₂ puis en UO₂ tout en conservant une capacité de rétention des particules d'UO₂F₂ ou d'UO₂. Dans un mode de réalisation privilégié, les filtres 52 sont fabriqués en céramique ou en superalliage base nickel

Les poudres d'UO₂F₂ et d'UO₂ sont volatiles et facilement emportées par des flux gazeux. Par ailleurs, elles ont tendance à adhérer aux surfaces avec lesquelles elles sont en contact.

En fonctionnement, il se crée alors des agglomérats de poudre, plus ou moins hétérogènes en termes de composition et plus ou moins compacts, sur les filtres 52 et sur les parois du réacteur 4 et du four 6. Ces agglomérats de poudre contenant de la matière fissile peuvent notamment se concentrer dans des zones de rétention pouvant exister en divers points de l'installation de conversion 2 comme par exemple à la jonction entre le réacteur 4 et le four 6.

Les agglomérats de poudre peuvent se détacher sous leur poids propre et se mêler à la poudre d'UO₂F₂ et à la poudre d'UO₂ à l'état pulvérulent. La présence d'amas compacts dans la poudre crée des hétérogénéités de traitement de la poudre dans le four 6 et peut conduire à la présence de particules d'UO₂F₂ résiduelles dans la poudre d'UO₂ obtenue en fin de conversion, dégradant ainsi sa qualité.

De plus, l'accumulation de poudre sur les filtres 52 provoque un colmatage progressif des filtres 52 et entraîne une élévation de la pression interne du réacteur 4. Les variations de pression ont un impact significatif sur le maintien d'une qualité constante de la poudre d'UO₂ obtenue en fin de conversion et une pression interne trop importante du réacteur 4 peut provoquer une mise en sécurité de l'installation de conversion 2.

Lorsque les filtres 52 sont colmatés par les poudres d'UO₂F₂ et/ou d'UO₂, il est nécessaire d'arrêter l'installation de conversion 2 et de nettoyer ou changer les filtres 52, ce qui est fastidieux et coûteux.

Il peut également se produire un bouchage au niveau du dispositif d'injection des réactifs dans le réacteur 4, ici l'injecteur concentrique 11. En effet, si la pression et la température d'injection des gaz ne sont pas suffisantes, l'UF₆ peut cristalliser en sortie de l'injecteur concentrique 11 et ainsi boucher l'alimentation en réactifs du réacteur 4. Il est donc important de conserver une pression d'alimentation constante, en particulier lors des changements de source d'UF₆.

L'installation de conversion 2 comprend avantageusement un dispositif de décolmatage 53 configuré pour le décolmatage des filtres 52, par exemple par injection impulsionnelle de gaz neutre à travers les filtres 52 à contre-courant, i.e. vers l'intérieur de la chambre de réaction 18 du réacteur 4. Le gaz neutre est par exemple de l'azote (N₂).

L'injection de gaz neutre à contre-courant est susceptible de perturber l'équilibre de pression à l'intérieur du réacteur 4. Il est souhaitable de réaliser le décolmatage de manière maîtrisée, selon des paramètres déterminés pour limiter les perturbations du fonctionnement du réacteur 4, et notamment de la pression à l'intérieur du réacteur 4.

Avantageusement, le dispositif de décolmatage 53 est configuré pour effectuer le décolmatage des filtres 52 de manière automatisée, en procédant au décolmatage de manière séquentielle par groupes de filtre(s) 52 distincts.

Le dispositif de décolmatage 53 est alors configuré pour injecter le gaz neutre à contre-courant séquentiellement dans les différents groupes de filtre(s) 52. Chaque groupe de filtre(s) 52 comprend un seul filtre 52 ou plusieurs filtres 52.

Dans un mode de réalisation privilégié, les filtres 52 sont regroupés en deux groupes contenant chacun une moitié respective des filtres 52 et le décolmatage est effectué alternativement dans les deux groupes avec une injection de gaz neutre réalisée périodiquement, par exemple toutes les 30 secondes. Il est également possible d'effectuer le cycle de décolmatage par exemple par tiers ou par quart et/ou d'adapter la fréquence d'injection.

La pression d'injection de gaz neutre à contre-courant dans chaque filtre 52 est choisie pour limiter les perturbations dans le réacteur 4. Une pression relative appliquée à chaque filtre 52, de préférence comprise entre 2 et 5 bars, en particulier entre 3 et 4.5 bars, permet d'obtenir un décolmatage satisfaisant du filtre 52. Sauf mention contraire dans le texte, l'expression « pression relative » fait référence à la différence de pression par rapport à la pression atmosphérique.

Afin de garantir une pression constante d'injection du gaz neutre, le dispositif de décolmatage 53 est par exemple alimenté par un réservoir 55 contenant le gaz neutre et maintenu à une pression constante

La durée d'injection de gaz neutre à contre-courant dans chaque filtre 52 est choisie pour limiter les perturbations dans le réacteur 4 tout en permettant un décolmatage satisfaisant, en particulier sur toute la surface du filtre 52 au cours de la durée d'injection. La durée d'injection de gaz neutre à contre-courant dans chaque filtre 52 est par exemple inférieure à 1s.

De préférence, lors de l'injection de gaz neutre à contre-courant dans chaque filtre 52, le dispositif de captage 50 est configuré pour couper l'aspiration à travers ce filtre 52 avant l'injection de gaz neutre à-courant pour éviter que le gaz neutre utilisé pour le décolmatage s'échappe directement via le dispositif de captage 50.

De préférence, le dispositif de décolmatage 53 est configuré pour effectuer le décolmatage de manière cyclique, en particulier avec une période choisie pour éviter l'accumulation de poudres sur les filtres 52 tout en limitant l'impact de cette injection sur le fonctionnement de l'installation de conversion 2. De préférence, la période est comprise entre 30 secondes et 1 minute.

Ainsi, selon un mode de réalisation préféré, le dispositif de décolmatage est configuré pour répéter la séquence de décolmatage automatiquement de manière cyclique (ou périodique). Un décolmatage automatique, séquentiel et périodique, des filtres 52 permet d'assurer un fonctionnement de l'installation de conversion 2, par exemple à une pression relative comprise entre 10 mbar et 500 mbar dans le réacteur 4, de préférence entre 50 et 400 mbar et encore de préférence entre 100 et 350 mbar, ce qui permet d'obtenir une poudre d'UO₂ présentant des caractéristiques satisfaisantes, notamment une teneur en fluor raisonnable et sensiblement constante au cours du temps.

Le décolmatage des filtres 52 provoque la chute des amas de poudre formés sur les filtres 52 et évite une élévation de pression excessive dans la chambre de réaction 18.

Le décolmatage séquentiel et périodique permet de limiter la taille et la compacité des agglomérats de matières solides formés sur les filtres 52 et d'éviter leur détachement sous leur propre poids et leur chute par gravité en trop grande quantité au fond de la chambre de réaction 18 dans le dispositif de transfert 30. Le mélange d'agglomérats compacts avec la poudre d'UO₂F₂ à l'état pulvérulent peut en effet induire des hétérogénéités sur les caractéristiques physiques et chimiques de la poudre d'UO₂ qui en est issue et en particulier sur sa teneur en fluor.

Le décolmatage réalisé par groupes de plusieurs filtres 52 évite que de la poudre chassée d'un filtre 52 ne se colle sur un autre filtre 52 comme cela pourrait être le cas avec un décolmatage individuel des filtres 52. Le décolmatage réalisé par groupes de plusieurs filtres 52 permet de générer un brouillard de poudre et de limiter la formation d'amas.

En complément facultatif du décolmatage séquentiel et périodique, le dispositif de décolmatage 53 peut comprendre une commande, manuelle ou automatique, pour permettre un décolmatage ponctuel des filtres 52, notamment lorsque ceux-ci arrivent en fin de vie et que le décolmatage séquentiel et périodique devient insuffisant. Ce décolmatage ponctuel peut être un décolmatage unitaire des filtres 52 ou un décolmatage d'un groupe de filtres 52 de taille réduite.

Comme illustré sur la Figure 1, de préférence, l'installation de conversion 2 comprend en outre au moins un dispositif d'écoulement 56 destiné à éviter l'accumulation de poudre sur les parois de la chambre de réaction 18 et le collage sur les parois de la chambre de réaction 18 des amas de poudre évacués des filtres 52 lors de l'opération de décolmatage.

Le dispositif d'écoulement 56 permet de favoriser un écoulement continu de la poudre et des conditions stables d'alimentation du four 6 en poudre d'UO₂F₂ tant en termes de quantité qu'en terme de qualité, et notamment avec une teneur en fluor stable dans le temps.

Le dispositif d'écoulement est configuré pour mettre en vibration et/ou percuter au moins une paroi du réacteur 4, de préférence régulièrement ou continûment.

Le dispositif d'écoulement 56 comprend par exemple un ou plusieurs organe(s) de percussion, chaque organe de percussion étant configuré pour percuter une paroi du réacteur 4 de manière à générer une onde de choc dans les parois du réacteur 4, et/ou un ou plusieurs organe(s) vibrateur(s), par exemple des pots vibrants, chaque organe vibrateur étant disposé sur une paroi du réacteur 4 et configuré pour générer un signal vibratoire (ou vibration) et transmettre cette vibration aux parois du réacteur 4. Dans un mode préféré, le dispositif d'écoulement 56 comprend un ou plusieurs organes qui génèrent à la fois des chocs pour décoller la poudre de la paroi et des vibrations pour l'aider à s'écouler.

Dans la suite les organes de percussion, les organes vibrateurs et les organes délivrant les deux fonctions sont nommés « organes d'écoulement ».

Ainsi, de manière générale, le dispositif d'écoulement comprend au moins un organe d'écoulement configuré pour mettre en vibration et/ou percuter une paroi du réacteur 4.

Les organes d'écoulement permettent la mise en vibration régulière ou même continue des parois du réacteur 4.

Le dispositif d'écoulement 56 comprend ici quatre organes d'écoulement 58, par exemple de type électro-percuteur, disposés deux par deux en deux positions diamétralement opposées de la surface extérieure de la paroi du réacteur 4.

Avantageusement, lorsque le dispositif d'écoulement 56 comprend plusieurs organes d'écoulement 58, lorsque le réacteur 4 est en fonctionnement, les organes d'écoulement 58 sont commandés pour agir séquentiellement.

Le nombre, la position et la séquence de fonctionnement des organes d'écoulement 58 peuvent être adaptés en fonction de la géométrie du réacteur 4, de la qualité de la poudre et des paramètres de fonctionnement du dispositif de décolmatage 53.

Chaque organe d'écoulement 58 peut être fixé directement sur la paroi du réacteur 4 ou, par exemple, via une pièce intermédiaire. Dans ce cas, la pièce intermédiaire est par exemple amovible pour faciliter sa maintenance.

L'association du dispositif de décolmatage 53 et d'un dispositif d'écoulement 56 permet de limiter la taille et la compacité des amas de poudre qui se déposent sur les filtres 52 et sur les parois du réacteur 4, de réguler la retombée des amas en fond de réacteur 4 et ainsi d'assurer l'homogénéité de la poudre d'UO₂ notamment une teneur en fluor sensiblement constante au cours du temps.

L'installation de conversion 2 comprend des dispositifs d'étanchéité 54 pour assurer l'étanchéité entre le dispositif de transfert 30 et la chambre de réaction 18, entre le réacteur 4 et le four 6 et entre le four 6 et le dispositif de collecte 40. Les dispositifs d'étanchéité 54 sont disposés à la jonction entre le dispositif de transfert 30 et la chambre de réaction 18, à la jonction entre la tubulure de sortie 20 du réacteur 4 et l'entrée 26 du four 6, et à la jonction entre la sortie 28 du four 6 et la tubulure d'entrée 42 du dispositif de collecte 40. Les dispositifs d'étanchéité 54 assurent l'étanchéité en autorisant la rotation du dispositif de transfert 30 par rapport au réacteur 4 et la rotation du tambour 32 du four 6 par rapport au réacteur 4 et au dispositif de collecte 40.

Les dispositifs d'étanchéité 54 sont pressurisés avec un gaz neutre, et de préférence à l'azote.

A cet effet, comme illustré sur la Figure 1, l'installation de conversion 2 comprend par exemple des alimentations de pressurisation 57 agencées pour alimenter les dispositifs d'étanchéité 54 avec un gaz neutre de pressurisation.

La pression du gaz neutre alimentant les dispositifs d'étanchéité 54 est supérieure à celle présente dans l'installation de conversion 2 pour éviter toute dissémination de poudre à l'extérieur de l'installation de conversion 2. En pratique le gaz neutre de pressurisation des dispositifs d'étanchéité 54 est susceptible de passer dans le réacteur 4 et/ou dans le four 6, et les paramètres de fonctionnement du réacteur 4 et du four 6 sont adaptés pour prendre en compte cet apport de gaz neutre.

L'installation de conversion 2 comprend au moins un dispositif de percussion 60 pour percuter une surface de percussion 62 du four 6 de manière à décoller la poudre d'UO₂F₂ ou d'UO₂ de la surface interne du tambour 32.

L'installation de conversion 2 comprend ici un dispositif de percussion 60 disposé à chaque extrémité axiale du tambour 32 pour percuter une surface de percussion 62 formé par la surface externe de l'extrémité axiale du tambour 32 sortant axialement de l'enceinte thermique 38 du four 6. En variante, la surface de percussion 62 est définie par toute autre surface du four 6 permettant de transmettre des vibrations à la paroi périphérique du tambour 32 lorsque cette surface de percussion 62 du four 6 est percutée.

L'installation de conversion 2 peut avantageusement comprendre plusieurs dispositifs de percussion 60 disposés à une même extrémité du tambour 32 en étant répartis angulairement autour du tambour 32.

Dans un mode préféré, l'installation de conversion 2 comprend deux groupes de dispositifs de percussion 60, chaque groupe étant disposé à une extrémité respective parmi les deux extrémités du tambour 32, et les dispositifs de percussion 60 de chaque groupe étant répartis angulairement autour du tambour 32.

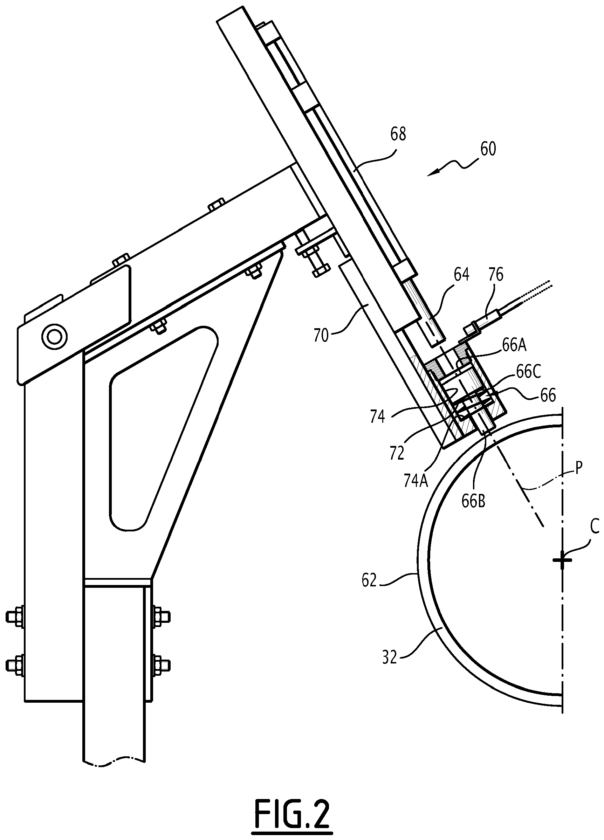

Les dispositifs de percussion 60 sont similaires. Seul un dispositif de percussion 60 est illustré plus en détail sur la Figure 2.

Comme illustré sur la Figure 2, chaque dispositif de percussion 60 comprend un percuteur 64 mobile par rapport à la surface de percussion 62 suivant une direction de percussion P et une pièce intermédiaire 66 disposée entre le percuteur 64 et la surface de percussion 62 de sorte que le percuteur 64 frappe la surface de percussion 62 par l'intermédiaire de la pièce intermédiaire 66, la pièce intermédiaire 66 étant mobile suivant la direction de percussion P entre une position espacée de la surface de percussion 62 et une position de contact avec la surface de percussion 62 du four 6.

La direction de percussion P est ici perpendiculaire au plan tangent à la surface de percussion 62 au point de contact de la pièce intermédiaire 66 avec la surface de percussion 62. La direction de percussion P est ici sensiblement radiale par rapport à l'axe central C du tambour 32.

Le percuteur 64 est porté par un actionneur de percussion 68 propre à déplacer le percuteur 64 en translation alternative suivant la direction de percussion P. L'actionneur de percussion 68 est ici un vérin hydraulique ou pneumatique à double effet.

Le dispositif de percussion 60 possède un support 70 portant l'actionneur 68 et la pièce intermédiaire 66, de sorte que la pièce intermédiaire 66 se situe entre le percuteur 64 et la surface de percussion 62. La pièce intermédiaire 66 est montée coulissante sur le support 70 suivant la direction de percussion P.

La pièce intermédiaire 66 possède une surface arrière 66A destinée à être percutée par le percuteur 64, et une surface avant 66B destinée à venir en contact avec la surface de percussion 62. En position de contact, la surface avant 66B est en contact avec la surface de percussion 62, et en position espacée, la surface avant 66B est espacée de la surface de percussion 62.

Le dispositif de percussion 60 comprend un organe élastique 72 de rappel agencé pour rappeler la pièce intermédiaire 66 en position espacée. La pièce intermédiaire 66 est reçue dans un logement 74 du support 70, l'organe élastique 72 étant interposé entre un épaulement interne 74A du logement 74 et un épaulement externe 66C de la pièce intermédiaire 66.

L'organe élastique 72 est ici un ressort hélicoïdal entourant la pièce intermédiaire 66 et comprimé lorsque la pièce intermédiaire 66 se déplace de la position espacée à la position de contact.

Le dispositif de percussion 60 comprend un capteur de position 76 permettant de connaître la position du percuteur 64. Le capteur de position 76 est par exemple un capteur inductif disposé à proximité de la pièce intermédiaire 66, et permettant de déterminer si le percuteur 64 est en contact ou non avec la pièce intermédiaire 66. L'actionneur de percussion 68 est commandé en fonction du signal de position fourni par le capteur de position 76.

En fonctionnement, l'actionneur de percussion 68 déplace le percuteur 64 en translation alternative de manière à écarter le percuteur 64 de la pièce intermédiaire 66 puis déplacer le percuteur 64 contre la pièce intermédiaire 66, de façon à percuter la surface de percussion 62 par l'intermédiaire de la pièce intermédiaire 66. Le percuteur 64 déplace la pièce intermédiaire 66 de la position espacée à la position de contact à l'encontre de l'organe élastique 72.

Les impacts répétés du percuteur 64 pourrait endommager le percuteur 64 lui-même et la surface externe du tambour 32. La prévision d'une pièce intermédiaire 66 distincte du percuteur 64 et qui n'est pas liée de manière permanente au four 6, permet d'utiliser la pièce intermédiaire 66 comme pièce sacrificielle ou pièce d'usure. Dans l'exemple illustré, la pièce intermédiaire 66 est montée mobile par rapport au four 6.

L'obtention d'une poudre d'UO₂ présentant des caractéristiques satisfaisantes, notamment une teneur en impuretés, essentiellement fluor, inférieure à 50 ppm, une distribution granulométrique homogène située par exemple dans la gamme allant de 20 à 100 µm, et une surface spécifique inférieure à 4 m²/g, dépend des conditions opératoires d'hydrolyse et de pyrohydrolyse, notamment des débits d'alimentation des réactifs et de la température.

Le dispositif d'alimentation 8 est configuré pour alimenter les réactifs et le gaz neutre, notamment le gaz neutre de balayage, avec des débits déterminés.

Le dispositif de chauffage 24 du réacteur 4 est configuré pour maintenir la chambre du réacteur 4 dans une plage de température adéquate pour l'obtention de poudres d'UO₂F₂ puis d'UO₂ avec les caractéristiques souhaitées.

De manière avantageuse, pendant une phase de production stabilisée, le débit horaire massique d'alimentation du réacteur 4 en UF₆ gazeux est compris entre 75 et 130 kg/h, le débit horaire massique d'alimentation du réacteur 4 en vapeur d'eau sèche d'hydrolyse est compris entre 15 et 30 kg/h, et la température dans le réacteur 4 est comprise entre 150 et 250°C.

Ces plages de valeurs permettent d'obtenir de la poudre d'UO₂F₂ permettant *in fine* d'obtenir de la poudre d'UO₂ présentant les caractéristiques souhaitées. En particulier, ces plages de valeurs permettent d'obtenir de la poudre d'UO₂ ayant une surface spécifique de grain comprise entre 1 m²/g et 4 m²/g, et de préférence entre 1,9 m²/g et 2,9 m²/g. En outre, ces plages de valeurs permettent d'obtenir de la poudre d'UO₂ avec une teneur résiduelle en fluor (F) inférieure à 50 ppm, de préférence inférieure à 35 ppm et encore de préférence inférieure à 20 ppm.

Dans un mode de réalisation avantageux, le débit horaire massique d'alimentation du réacteur 4 en UF₆ gazeux est compris entre 90 et 120 kg/h et le débit horaire massique d'alimentation du réacteur 4 en vapeur d'eau sèche d'hydrolyse est compris entre 20 et 25 kg/h.

Pour éviter la cristallisation de l'UF₆ lors de son injection dans le réacteur 4, le réacteur 4 est alimenté en UF₆ à une température d'alimentation comprise entre 75°C et 130°C, de préférence entre 90°C et 120°C.

Dans un mode particulier de réalisation, l'installation de conversion 2 comprend un dispositif d'émission permettant d'émettre l'UF₆ en continu vers le réacteur 4 avec un débit et une température d'UF₆ régulés.

L'UF₆ est transporté dans des réservoirs qui sont par exemple cylindriques. A température ambiante, l'UF₆ est à l'état solide. Le passage de l'état solide à l'état gazeux est effectué par chauffage des réservoirs, par exemple dans une enceinte chauffante, en particulier dans une étuve (non étanche) ou dans un autoclave (étanche).

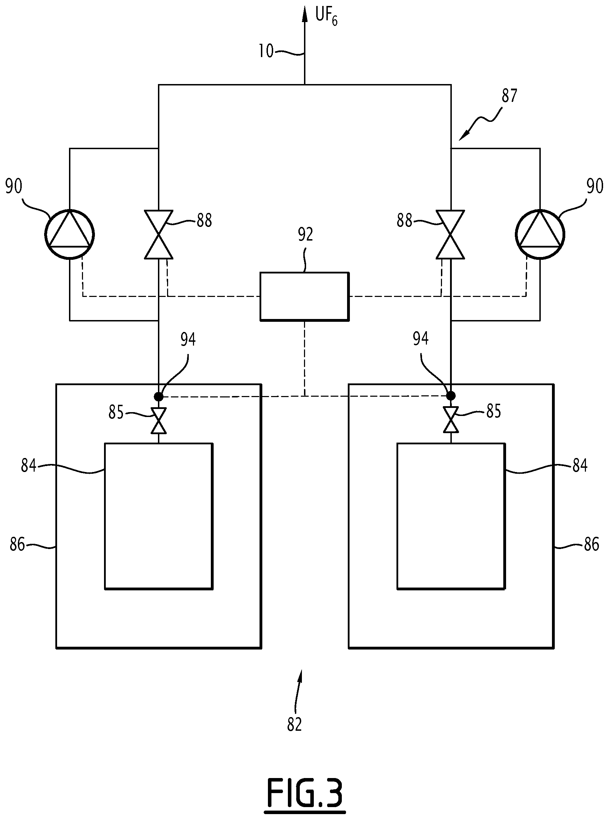

Comme illustré en Figure 3, l'installation de conversion 2 possède un dispositif d'émission 82 pour l'alimentation du réacteur 4 en UF₆ gazeux à partir de réservoirs 84 contenant de l'UF₆. Chaque réservoir 84 est fermé par une vanne 85 d'étanchéité.

Le dispositif d'émission 82 comprend au moins deux enceintes chauffantes 86, chaque enceinte chauffante 86 étant prévue pour recevoir un réservoir 84 d'UF₆ à l'état solide et le chauffer pour générer de l'UF₆ à l'état gazeux, le dispositif d'émission 82 étant configuré pour alimenter le réacteur 4 séquentiellement à partir des enceintes chauffantes 86, en passant d'une enceinte chauffante 86 courante à une enceinte chauffante 86 suivante lorsque le réservoir 84 reçu dans ladite enceinte chauffante 86 courante n'est plus suffisamment plein, de préférence sans interruption du flux d'UF₆ gazeux alimentant le réacteur 4. De préférence, chaque enceinte chauffante 86 est apte à chauffer et à maintenir le réservoir 84 respectif à une température supérieure à la température de point triple de l'UF₆, par exemple à une température supérieure à 75°C et de préférence à une température de nominale de 95°C, par exemple 95°C ± 10°C.

Le dispositif d'émission 82 ainsi comprend un circuit d'alimentation 87 configuré pour l'émission d'UF₆ vers le réacteur 4 sélectivement à partir de l'une des enceintes chauffantes 86, pendant que chaque autre enceinte chauffante 86 chauffe un réservoir 84 dans l'attente de l'émission d'UF₆ à partir de ce réservoir 84 ou est rechargée avec un réservoir 84 rempli d'UF₆.

Chaque enceinte chauffante 86 est par exemple reliée au réacteur 4 par l'intermédiaire d'une vanne 88 de régulation de débit respective dont la fermeture permet d'isoler l'enceinte chauffante 86 du réacteur 4 et l'ouverture permet de relier fluidiquement l'enceinte chauffante 86 au réacteur 4. L'ouverture de la vanne 85 du réservoir 84 puis de la vanne 88 permet l'écoulement de l'UF₆ de l'enceinte chauffante 86 vers le réacteur 4 du fait d'une différence de pression entre le réservoir 84 et le réacteur 4. L'enceinte chauffante 86 est alors dans un mode d'émission passive.

En option, chaque réservoir 84 est relié au réacteur 4 par l'intermédiaire d'une pompe 90 respective associée à chaque enceinte chauffante 86 et disposée en parallèle de la vanne 88 associée à cette enceinte chauffante 86. La pompe 90 est de préférence une pompe à déplacement positif et encore de préférence une pompe volumétrique à soufflets.

L'activation de la pompe 90 permet de forcer la circulation de l'UF₆ gazeux de l'enceinte chauffante 86 vers le réacteur 4 lorsque la pression dans le réservoir 84 contenu dans l'enceinte chauffante 86 est insuffisante pour assurer cette circulation. L'enceinte chauffante 86 est alors dans un mode d'émission active. Lorsque la vanne 88 est ouverte, la pompe 90 est by-passée.

Le dispositif d'émission 82 comprend par exemple un dispositif pour ouvrir la vanne du réservoir 84 respectif depuis l'extérieur de chaque enceinte chauffante 86 et une unité de commande électronique 92 configurée pour commander la vanne 88 et le cas échant la pompe 90 associée à chaque enceinte chauffante 86 et assurer l'alimentation séquentiellement à partir des enceintes chauffantes 86, et, le cas échéant, le passage du mode passif au mode actif pour chaque enceinte chauffante 86.

Le dispositif d'émission 82 est par exemple configuré pour commander le passage d'une enceinte chauffante 86 à la suivante, et le cas échéant le passage du mode passif au mode actif de manière asservie à la pression dans chaque réservoir 84.

Pour ce faire, le dispositif d'émission 82 comprend par exemple un capteur de pression 94 associé à chaque réservoir 84, l'unité de commande électronique 92 étant configurée pour commander la vanne 88 et le cas échant la pompe 90 associée à chaque enceinte chauffante 86 en fonction des mesures fournies par les capteurs de pression 94.

Au démarrage d'un cycle de production, un réservoir 84 est réchauffé dans une première enceinte chauffante 86 de préférence sous atmosphère de gaz neutre pour améliorer les échanges thermiques entre l'atmosphère de l'enceinte chauffante 86 et le réservoir 84. Le gaz neutre est par exemple de l'azote. Lorsque la température requise est atteinte, c'est-à-dire lorsque l'UF₆ solide a été liquéfié et que l'UF₆ dans le réservoir 84 est dans une phase d'équilibre liquide/gaz, et après ouverture de la vanne 85 d'étanchéité du réservoir 84, la vanne 88 disposée entre la sortie de cette première enceinte chauffante 86 et le conduit d'injection 10 de l'UF₆ dans le réacteur 4 s'ouvre et l'émission d'UF₆ commence en mode d'émission passif à partir de cette première enceinte chauffante 86. En parallèle, le réchauffage d'un autre réservoir 84 dans une deuxième enceinte chauffante 86 débute.

Au fur et à mesure de l'émission d'UF₆, la pression dans le réservoir 84 de la première enceinte chauffante 86 baisse jusqu'à une valeur proche de celle pouvant provoquer une chute du débit de l'UF₆ et l'inversion des flux entre le réacteur 4 et le réservoir 84 reçu dans cette première enceinte chauffante 86. Il reste alors encore plusieurs kilogrammes d'UF₆ dans le réservoir 84. Avant d'atteindre ce stade, la première enceinte chauffante 86 bascule du mode d'émission passif au mode d'émission actif avec la fermeture de la vanne 88 et la mise en route de la pompe 90 correspondante. L'émission d'UF₆ peut ainsi se poursuivre jusqu'à émission de la quasi-totalité de l'UF₆ contenu dans le réservoir 84 de la première enceinte chauffante 86, avec par exemple une pression en fin d'émission de 100 mbar absolu dans le réservoir 84. A ce moment, le réservoir 84 reçu dans la deuxième enceinte chauffante 86 a atteint la température requise pour l'émission d'UF₆ et la vanne 85 d'étanchéité du réservoir 84 est ouverte. La vanne 88 associée à la première enceinte chauffante 86 se ferme et la vanne 88 associée à la deuxième enceinte chauffante 86 s'ouvrent et l'émission d'UF₆ se poursuit à partir du réservoir 84 de la deuxième enceinte chauffante 86 sans interruption et sans modification notable du débit, de la température et de la pression de l'UF₆ lors du basculement de la première enceinte chauffante 86 à la deuxième enceinte chauffante 86. En parallèle la vanne 85 du réservoir 84 reçu dans la première enceinte chauffante 86 est fermée et, après refroidissement, la première enceinte chauffante 86 est mise à l'atmosphère, déverrouillée et le réservoir 84 est évacué et remplacé par un nouveau réservoir 84 rempli d'UF₆.

En variante et pour réduire encore les variations d'alimentation du réacteur 4 en UF₆, la vanne 88 associée à la deuxième enceinte chauffante 86 peut s'ouvrir avant que la vanne 88 associée à la première enceinte chauffante 86 ne se ferme et l'émission d'UF₆ se poursuit à partir des deux réservoirs 84, la première enceinte chauffante 86 fonctionnant en mode d'émission actif et la deuxième enceinte chauffante 86 fonctionnant en mode d'émission passif. L'ouverture de la vanne 88 associée à la deuxième enceinte chauffante 86 peut intervenir par exemple au moment de la fermeture de la vanne 88 et de la mise en route de la pompe 90 de la première enceinte chauffante 86 ou à tout autre moment avant arrêt de l'émission d'UF₆ par le réservoir 84 de la première enceinte chauffante 86.

De préférence et afin de pouvoir couper l'alimentation en UF₆ au plus près de la source d'émission en toutes circonstances, les vannes 88 sont résistantes aux sollicitations sismiques.

Le dispositif d'émission 82 permet une production en continu de l'installation de conversion 2, en utilisant la quasi-totalité de l'UF₆ contenu dans les réservoirs 84 avec une émission d'UF₆ à la pression et la température requises et avec le débit requis.

De préférence, le réacteur 4 est alimenté en vapeur d'eau sèche d'hydrolyse à une température d'alimentation comprise entre 175°C et 300°C, en particulier entre 200°C et 270°C.

De préférence, le four 6 est alimenté en vapeur d'eau sèche de pyrohydrolyse avec un débit horaire massique d'alimentation compris entre 25 et 40 kg/h, en particulier entre 30 et 35 kg/h.

De préférence également, le four 6 est alimenté en vapeur d'eau sèche de pyrohydrolyse à une température d'alimentation comprise entre 250°C et 450°C, de préférence entre 300°C et 400°C.

De préférence, le débit volumique d'alimentation du four 6 en H₂ est compris entre 10 et 25 Nm³/h, en particulier entre 15 et 20 Nm³/h (« Nm³/h » signifie normaux mètres cubes par heure et est une unité de mesure de quantité de gaz qui correspond au contenu d'un volume d'un mètre cube, pour un gaz se trouvant dans les conditions normales de température et de pression (20°C et 1 atm)). L'H₂ est généralement injecté à température ambiante.

Les paramètres d'injection du gaz neutre de balayage alimentant le réacteur 4 influent sur les réactions se produisant dans le réacteur 4.

De préférence, le débit d'alimentation du gaz neutre de balayage du réacteur 4 est compris entre 1,5 et 5 Nm³/h, la température d'injection du gaz neutre de balayage est comprise entre 80°C et 130°C, et la pression relative d'alimentation de ce gaz neutre de balayage est supérieure à la pression relative à l'intérieur du réacteur 4 et est de préférence inférieure à 1 bar.

Dans un mode de réalisation particulier, le débit d'alimentation du gaz neutre de balayage est compris entre 2 et 3 Nm³/h et la température d'injection du gaz neutre de balayage est comprise entre 90 et 105°C.

Par ailleurs, les éléments chauffants 36 du four 6 sont commandés pour établir dans le four 6 une température progressivement croissante puis décroissante de l'entrée 26 du four 6 vers la sortie 28 du four 6.

Le four 6 comprend par exemple plusieurs tronçons successifs définis le long du four 6, ici six tronçons S1 à S6 successifs de l'entrée 26 vers la sortie 28 du four 6, chaque tronçon S1 à S6 étant chauffé par des éléments chauffants 36 dédiés à ce tronçon S1 à S6.

Le four 6 comprend un capteur de température 80 respectif associé à chaque tronçon S1 à S6. La température de chaque tronçon du four 6 est considérée comme étant celle mesurée par le capteur de température 80 associé à ce tronçon. Chaque capteur de température 80 est par exemple un thermocouple adjacent aux éléments chauffants 36 associé au tronçon.

Les éléments chauffants 36 dédiés à chaque tronçon S1 à S6 sont commandés indépendamment de ceux dédiés aux autres tronçons pour que la température mesurée par le capteur de température 80 situé dans ce tronçon se situe à une valeur de consigne déterminée.

Dans un mode de réalisation avantageux, chaque tronçon S1 à S6 est muni de plusieurs capteurs de température 80 et la température de chaque tronçon S1 à S6 du four 6 est considérée comme étant la moyenne des températures mesurées par les capteurs de température 80 en fonctionnement associés à ce tronçon S1 à S6.

Dans un mode de mise en oeuvre avantageux, les éléments chauffants 36 du four 6 sont commandés pour établir un profil de température suivant :
- premier tronçon S1 : entre 660 et 700°C
- deuxième tronçon S2 : entre 700 et 730°C
- troisième tronçon S3 : entre 720 et 745°C
- quatrième tronçon S4 : entre 730 et 745°C
- cinquième tronçon S5 : entre 660 et 700°C
- sixième tronçon S6 : entre 635 et 660°C.

Ce profil de température permet de contrôler l'évolution de la pyrohydrolyse de la poudre d'UO₂F₂, qui est une réaction complexe constituée de plusieurs réactions élémentaires qui dépendent notamment de la température.

En phase de production, le dispositif de décolmatage 53 réalise un décolmatage périodique, de manière automatique et régulière. En outre, de préférence, le dispositif d'écoulement 56 fait vibrer et/ou percute le réacteur 4, de manière automatique, régulièrement ou continûment, et/ou le dispositif de percussion 60 percute le four 6, de manière automatique et régulière, pour faire tomber la poudre collée sur les parois internes avant que celle-ci ne forme des amas de grandes dimensions et/ou compacts.

Les filtres 52 peuvent malgré tout se colmater de manière excessive au fur et à mesure du fonctionnement de l'installation de conversion 2 et de leur vieillissement.

L'augmentation de la pression relative à l'intérieur du réacteur 4 est en général représentative du fait que le décolmatage des filtres 52 devient insuffisant.

La surveillance de la pression à l'intérieur du réacteur 4 permet de surveiller l'efficacité du décolmatage.

De préférence, en phase de production stabilisée, il est souhaitable que la pression relative à l'intérieur du réacteur 4 reste comprise entre 10 mbar et 500 mbar, de préférence entre 50 et 400 mbar et encore de préférence entre 100 et 350 mbar.

L'installation de conversion 2 comprend un capteur de pression P1 pour mesurer la pression à l'intérieur du réacteur 4.

De préférence, si la pression relative à l'intérieur du réacteur 4 dépasse un seuil de mise en sécurité prédéterminé, le système de pilotage 16 est configuré pour commander une mise à l'arrêt de l'installation de conversion 2.

Le seuil de mise en sécurité est par exemple compris entre 100 et 500 mbar, de préférence entre 200 et 450 mbar et encore de préférence entre 200 et 400 mbar, en particulier environ 350 mbar.

Avantageusement, si la pression relative à l'intérieur du réacteur 4 dépasse un seuil de décolmatage ponctuel prédéterminé, le dispositif de décolmatage 53 est commandé pour la réalisation d'un décolmatage ponctuel des filtres 52. Le décolmatage ponctuel peut être réalisé avec une pression d'injection de décolmatage dans la partie supérieure de la plage de pression d'injection de gaz neutre de décolmatage séquentiel voire à une pression d'injection supérieure à ladite plage. Le décolmatage ponctuel peut en outre être réalisé spécifiquement sur un ou plusieurs filtres 52, par exemple individuellement sur un ou plusieurs filtres 52 particuliers qui seraient colmatés, ou ensemble sur un nombre limité de filtres 52.

Le seuil de décolmatage ponctuel est par exemple fixé dans une plage de 100 mbar en dessous de la pression de mise en sécurité de l'installation et est par exemple de 50 mbar et de préférence de 30 mbar inférieur au seuil de mise en sécurité de l'installation.

En effet, en cas de colmatage important des filtres 52, la pression augmente rapidement dans le réacteur 4 et il devient difficile, voire impossible de décolmater les filtres 52 sans arrêter l'installation pour procéder à un nettoyage manuel ou à leur remplacement ou sans créer d'hétérogénéités de la poudre d'UO₂ en sortie du fait de l'ajout dans la poudre d'UO₂F₂ de quantités incontrôlées d'agglomérats retombant des filtres 52 dans le dispositif de transfert 30 lors de l'opération de décolmatage.

Lors du décolmatage, l'injection de gaz neutre à l'intérieur de chaque filtre 52 permet d'expulser les particules de poudre d'UO₂F₂ piégées sur la surface extérieure du filtre 52, tout en limitant les perturbations du réacteur 4 fonctionnant à une pression relative entre 10 mbar et 500 mbar.

La mise en vibration et/ou la percussion d'une ou plusieurs parois du réacteur 4, ici par le dispositif d'écoulement 56 équipant le réacteur 4, permet en outre de décoller les particules de poudre d'UO₂F₂ qui peuvent se déposer sur la paroi interne du réacteur 4.

La percussion d'une surface de percussion 62 du four 6, ici par le dispositif de percussion 60, permet d'éviter la formation d'amas de poudre dans le four 6, qui pourraient également affecter la qualité de la poudre d'UO₂ produite par l'installation de conversion 2.

Le contrôle des débits de gaz réactifs et de gaz neutre de balayage et de la température dans le réacteur 4 et dans le four 6 permettent également l'établissement de réactions d'hydrolyse et de pyrohydrolyse dans des conditions d'obtention de poudre d'UO₂ satisfaisantes.

De manière générale, en fonctionnement, l'ensemble des gaz injectés dans le réacteur 4 ou dans le four 6 le sont à une pression supérieure à celle existant dans le réacteur 4 ou le four 6, par exemple à une pression au moins 20 mbar au-dessus de la pression à l'intérieur du réacteur 4 ou du four 6, et de préférence au moins 50 mbar au-dessus.

## Revendications

1. Procédé de conversion d'hexafluorure d'uranium, UF₆, en dioxyde d'uranium, UO₂, le procédé comprenant les étapes de :
- hydrolyse d'UF₆ en oxyfluorure d'uranium, UO₂F₂, dans un réacteur (4) d'hydrolyse par réaction entre de l'UF₆ gazeux et de la vapeur d'eau sèche injectés dans le réacteur (4), et
- pyrohydrolyse de l'UO₂F₂ en UO₂ dans un four (6) de pyrohydrolyse par réaction de l'UO₂F₂ avec de la vapeur d'eau sèche et du dihydrogène, H₂, gazeux injectés dans le four (6),
dans lequel le débit horaire massique d'alimentation du réacteur (4) en UF₆ gazeux est compris entre 75 et 130 kg/h, le débit horaire massique d'alimentation du réacteur (4) en vapeur d'eau sèche d'hydrolyse est compris entre 15 et 30 kg/h, et la température dans le réacteur (4) est comprise entre 150 et 250°C.

2. Procédé de conversion selon la revendication 1, comprenant l'injection d'un gaz neutre de balayage dans le réacteur (4).

3. Procédé de conversion selon la revendication 1 ou 2, dans lequel l'UO₂ est obtenu sous la forme d'une poudre d'UO₂ ayant une surface spécifique de grain comprise entre 1 m²/g et 4 m²/g, et de préférence entre 1,9 m²/g et 2,9 m²/g.

4. Procédé de conversion selon l'une quelconque des revendications précédentes, dans lequel l'UO₂ a une teneur résiduelle en fluor, F, inférieure à 50 ppm, de préférence inférieure à 35 ppm.

5. Procédé de conversion selon l'une quelconque des revendications précédentes, dans lequel l'UF₆ alimentant le réacteur (4) est à une température comprise entre 75°C et 130°C, de préférence entre 90°C et 12°C.

6. Procédé de conversion selon l'une quelconque des revendications précédentes, dans lequel la vapeur d'eau sèche d'hydrolyse alimentant le réacteur (4) est à une température comprise entre 175 et 300°C, de préférence entre 200 et 270°C.

7. Procédé de conversion selon l'une quelconque des revendications précédentes, dans lequel le débit horaire massique de vapeur d'eau sèche de pyrohydrolyse alimentant le four (6) est compris entre 25 et 40 kg/h, de préférence entre 30 et 35 kg/h.

8. Procédé de conversion selon l'une quelconque des revendications précédentes, dans lequel la température de la vapeur d'eau sèche de pyrohydrolyse alimentant le four (6) est comprise entre 250 et 450°C, de préférence entre 300 et 400°C.

9. Procédé de conversion selon l'une quelconque des revendications précédentes, dans lequel le débit volumique d'alimentation du four (6) en H₂ est compris entre 10 et 25 Nm³/h, en particulier entre 15 et 20 Nm³/h.

10. Procédé de conversion selon l'une quelconque des revendications précédentes, dans lequel le débit d'alimentation du réacteur (4) en gaz neutre de balayage est compris entre 1,5 et 5 Nm³/h, la température du gaz neutre de balayage alimentant le réacteur (4) est comprise entre 80°C et 130°C, et la pression relative d'alimentation du gaz neutre de balayage est supérieure à la pression relative à l'intérieur du réacteur (4) et est de préférence inférieure à 1 bar.

11. Procédé de conversion selon l'une quelconque des revendications précédentes, comprenant l'alimentation du réacteur (4) en UF₆ gazeux à partir d'un dispositif d'émission (82) comprenant au moins une enceinte chauffante (86), la ou chaque enceinte chauffante (86) recevant un réservoir (84) d'UF₆ à l'état solide et le chauffant pour générer de l'UF₆ à l'état gazeux, et un circuit d'alimentation (87) configuré pour alimenter le réacteur (4) à partir de la ou chaque enceinte chauffante (86).

12. Procédé de conversion selon la revendication 11, dans lequel le dispositif d'émission (82) comprend au moins deux enceintes chauffantes (86), le circuit d'alimentation (87) étant configuré pour alimenter le réacteur (4) séquentiellement à partir des enceintes chauffantes (86), en passant d'une enceinte chauffante (86) courante à une enceinte chauffante (86) suivante lorsque le réservoir (84) reçu dans ladite enceinte chauffante (86) courante n'est plus suffisamment plein.

13. Procédé de conversion selon la revendication 12, dans lequel l'alimentation du réacteur (4) à partir de l'enceinte chauffante (86) suivante commence avant l'arrêt de l'alimentation du réacteur (4) à partir de l'enceinte chauffante (86) courante, de sorte que l'alimentation du réacteur (4) est réalisée simultanément à partir des deux enceintes chauffantes (86) pendant une période de temps.

14. Procédé de conversion selon l'une quelconque des revendications 11 à 13, dans lequel le circuit d'alimentation (87) comprend une pompe (90) associée à la ou à chaque enceinte chauffante (86) pour forcer la circulation de l'UF₆ du réservoir (84) reçu dans l'enceinte chauffante (86) vers le réacteur (4), la ou chaque pompe (90) étant de préférence une pompe à déplacement positif et encore de préférence une pompe volumétrique à soufflets.

15. Procédé de conversion selon la revendication 14, dans lequel le circuit d'alimentation (87) comprend une vanne (88) de régulation de débit associée à la ou chaque enceinte chauffante (86) et placée en dérivation de la pompe (90) associée à l'enceinte chauffante (86).

16. Installation de conversion d'hexafluorure d'uranium, UF₆, en dioxyde d'uranium, UO₂, l'installation de conversion comprenant :
- un réacteur (4) d'hydrolyse d'UF₆ en poudre d'oxyfluorure d'uranium, UO₂F₂, par réaction entre de l'UF₆ gazeux et de la vapeur d'eau sèche injectés dans le réacteur (4),
- un four (6) de pyrohydrolyse de la poudre d'UO₂F₂ en poudre d'UO₂ par réaction de la poudre d'UO₂F₂ avec de la vapeur d'eau sèche et du dihydrogène, H₂, gazeux injectés dans le four (6), et
- un dispositif d'alimentation (8) du réacteur (4) et du four (6) en gaz réactifs et en gaz neutre de balayage,
**caractérisée en ce que** l'installation de conversion est configurée pour la mise en oeuvre d'un procédé selon l'une quelconque des revendications précédentes.

17. Installation de conversion selon la revendication 16, comprenant un dispositif d'émission (82) pour l'alimentation du réacteur (4) en UF₆, le dispositif d'émission (82) comprenant au moins une enceinte chauffante (86), la ou chaque enceinte chauffante (86) étant configurée pour recevoir un réservoir (84) d'UF₆ à l'état solide et le chauffer pour générer de l'UF₆ à l'état gazeux, et un circuit d'alimentation (87) configuré pour alimenter le réacteur (4) à partir de la ou chaque enceinte chauffante (86).

## Patentansprüche

1. Umwandlungsverfahren von Uranhexafluorid UF₆, in Uraniumdioxid, UO₂, das Verfahren umfassend die folgenden Schritte:
- Hydrolyse von UF₆ zu Uranoxyfluorid UO₂F₂, in einem Hydrolysereaktor (4) durch Reaktion zwischen gasförmigem UF₆ und trockenem Wasserdampf, der in den Reaktor (4) eingespritzt wird, und
- Pyrohydrolyse von UO₂F₂ zu UO₂ in einem Pyrohydrolyseofen (6) durch Reaktion von UO₂F₂ mit trockenem Wasserdampf und Wasserstoffgas, H₂, das in den Ofen (6) eingespritzt wird,
wobei der stündliche Massendurchsatz zu Beschicken des Reaktors (4) mit gasförmigem UF₆ zwischen 75 und 130 kg/h liegt, der stündliche Massendurchsatz zum Beschicken des Reaktors (4) mit trockenem Hydrolysedampf zwischen 15 und 30 kg/h liegt und die Temperatur in dem Reaktor (4) zwischen 150 und 250 °C liegt.

2. Umwandlungsverfahren nach Anspruch 1, umfassend das Einspritzen eines neutralen Spülgases in den Reaktor (4).

3. Umwandlungsverfahren nach Anspruch 1 oder 2, wobei das UO₂ in Form eines UO₂-Pulvers erlangt wird, das eine spezifische Kornoberfläche zwischen 1 m²/g und 4 m²/g, vorzugsweise zwischen 1,9 m²/g und 2,9 m²/g aufweist.

4. Umwandlungsverfahren nach einem der vorherigen Ansprüche, wobei das UO₂ einen Restgehalt an Fluor, F, von weniger als 50 ppm, vorzugsweise weniger als 35 ppm, aufweist.

5. Umwandlungsverfahren nach einem der vorherigen Ansprüche, wobei das UF₆, mit dem der Reaktor (4) beschickt wird, auf einer Temperatur zwischen 75 °C und 130 °C, vorzugsweise zwischen 90 °C und 100 °C, ist.

6. Umwandlungsverfahren nach einem der vorherigen Ansprüche, wobei der trockene Hydrolysedampf, mit dem der Reaktor (4) beschickt wird, auf einer Temperatur zwischen 175 und 300 °C, vorzugsweise zwischen 200 und 270 °C, ist.

7. Umwandlungsverfahren nach einem der vorherigen Ansprüche, wobei der stündliche Massenstrom von trockenem Pyrohydrolysedampf, der dem Ofen (6) zugeführt wird, zwischen 25 und 40 kg/h, vorzugsweise zwischen 30 und 35 kg/h, liegt.

8. Umwandlungsverfahren nach einem der vorherigen Ansprüche, wobei die Temperatur des trockenen Pyrohydrolysedampfs, der dem Ofen (6) zugeführt wird, zwischen 250 und 450 °C, vorzugsweise zwischen 300 und 400 °C, liegt.

9. Umwandlungsverfahren nach einem der vorherigen Ansprüche, wobei der Volumenstrom zum Beschicken des Ofens (6) mit H₂ zwischen 10 und 25 Nm³/h, insbesondere zwischen 15 und 20 Nm³/h, liegt.

10. Umwandlungsverfahren nach einem der vorherigen Ansprüche, wobei die Beschickungsrate des Reaktors (4) mit neutralen Spülgas zwischen 1,5 und 5 Nm³/h liegt, die Temperatur des neutralen Spülgases, mit dem der Reaktor (4) beschickt wird, zwischen 80 °C und 130 °C liegt und der relative Beschickungsdruck des neutralen Spülgases höher ist als der relative Druck im Inneren des Reaktors (4) und vorzugsweise unter 1 bar ist.

11. Umwandlungsverfahren nach einem der vorherigen Ansprüche, umfassend das Beschicken des Reaktors (4) mit gasförmigem UF₆ aus einer Emissionsvorrichtung (82), umfassend mindestens eine Heizkammer (86), wobei die oder jede Heizkammer (86) einen Behälter (84) mit UF₆ in festem Zustand aufnimmt und diesen erhitzt, um UF₆ in gasförmigem Zustand zu erzeugen, und einen Beschickungskreislauf (87), der konfiguriert ist, um den Reaktor (4) aus der oder jeder Heizkammer (86) zu beschicken.

12. Umwandlungsverfahren nach Anspruch 11, wobei die Emissionsvorrichtung (82) mindestens zwei Heizkammern (86) umfasst, wobei der Beschickungskreislauf (87) konfiguriert ist, um den Reaktor (4) sequentiell aus den Heizkammern (86) zu beschicken, indem er von einer aktuellen Heizkammer (86) zu einer nächsten Heizkammer (86) wechselt, wenn der in der aktuellen Heizkammer (86) aufgenommene Behälter (84) nicht mehr ausreichend gefüllt ist.

13. Umwandlungsverfahren nach Anspruch 12, wobei die Beschickung des Reaktors (4) aus dem nächsten Heizbehälter (86) beginnt, bevor die Beschickung des Reaktors (4) aus dem aktuellen Heizbehälter (86) angehalten wird, sodass die Beschickung des Reaktors (4) aus beiden Heizbehältern (86) über eine Zeitdauer gleichzeitig erfolgt.

14. Umwandlungsverfahren nach einem der Ansprüche 11 bis 13, wobei der Beschickungskreislauf (87) eine Pumpe (90) umfasst, die mit der oder jeder Heizkammer (86) assoziiert ist, um die Zirkulation des UF₆ aus dem in der Heizkammer (86) aufgenommenen Reservoir (84) zu dem Reaktor (4) zu erzwingen, wobei die oder jede Pumpe (90) vorzugsweise eine Verdrängerpumpe und noch bevorzugter eine volumetrische Balgpumpe ist.

15. Umwandlungsverfahren nach Anspruch 14, wobei der Beschickungskreislauf (87) ein Ventil (88) zur Durchflussregelung umfasst, das mit dem oder jedem Heizgefäß (86) assoziiert ist und in dem Bypass zu der mit dem Heizgefäß (86) assoziierten Pumpe (90) angeordnet ist.

16. Umwandlungsanlage von Uranhexafluorid, UF₆, in Urandioxid, UO₂, die Umwandlungsanlage umfassend:
- einen Reaktor (4) zur Hydrolyse von UF₆ zu Uranoxidfluoridpulver, UO₂F₂, durch Reaktion zwischen gasförmigem UF₆ und trockenem Wasserdampf, der in den Reaktor (4) eingespritzt wird,
- einen Ofen (6) zur Pyrohydrolyse des UO₂F₂-Pulvers zu UO₂-Pulver durch Reaktion des UO₂F₂-Pulvers mit trockenem Wasserdampf und Wasserstoffgas, H₂, das in den Ofen (6) eingespritzt wird, und
- eine Beschickungsvorrichtung (8) des Reaktors (4) und des Ofens (6) mit reaktiven Gasen und neutralem Spülgas,
**dadurch gekennzeichnet, dass** die Umwandlungsanlage für die Durchführung eines Verfahrens nach einem der vorherigen Ansprüche konfiguriert ist.

17. Umwandlungsanlage nach Anspruch 16, umfassend eine Emissionsvorrichtung (82) zum Beschicken des Reaktors (4) mit UF₆, die Emissionsvorrichtung (82) umfassend mindestens eine Heizkammer (86), wobei die oder jede Heizkammer (86) konfiguriert ist, um einen Reservoir (84) mit UF₆ in festem Zustand aufzunehmen und diesen zu erhitzen, um UF₆ in gasförmigem Zustand zu erzeugen, und einen Beschickungskreislauf (87), der konfiguriert ist, um den Reaktor (4) aus der oder jeder Heizkammer (86) zu beschicken.

## Claims

1. Method for converting uranium hexafluoride, UF₆, to uranium dioxide, UO₂, the method comprising the steps of:
- hydrolysis of UF₆ to uranium oxyfluoride, UO₂F₂, in a hydrolysis reactor (4) by reaction between gaseous UF₆ and dry water vapour injected into the reactor (4); and
- pyrohydrolysis of UO₂F₂ to UO₂ in a pyrohydrolysis furnace (6) by reaction of UO₂F₂ with dry water vapour and hydrogen gas, H₂, injected into the furnace (6),
wherein the hourly mass flowrate of gaseous UF₆ supplied to the reactor (4) is between 75 and 130 kg/h, the hourly mass flowrate of dry water vapour supplied to the reactor (4) for hydrolysis is between 15 and 30 kg/h, and the temperature inside the reactor (4) is between 150 and 250°C.

2. Conversion method according to claim 1, comprising the injection of a neutral scavenging gas into the reactor (4).

3. Conversion method according to claim 1 or 2, wherein UO₂ is obtained in the form of a powder of UO₂ having a specific particle surface area of between 1 m²/g and 4 m²/g, and preferably between 1.9 m²/g and 2.9 m²/g.

4. Conversion method according to any of the preceding claims, wherein the UO₂ has a residual fluorine, F, content of less than 50 ppm, preferably less than 35 ppm.

5. Conversion method according to any of the preceding claims, wherein the UF₆ supplied to the reactor (4) is at a temperature of between 75 and 130°C, preferably between 90 and 120°C.

6. Conversion method according to any of the preceding claims, wherein the dry water vapour supplied to the reactor (4) for hydrolysis is at a temperature of between 175 and 300°C, preferably between 200 and 270 °C.

7. Conversion method according to any of the preceding claims, wherein the hourly mass flowrate of dry water vapour supplied to the furnace (6) for pyrohydrolysis is between 25 and 40 kg/h, preferably between 30 and 35 kg/h.

8. Conversion method according to any of the preceding claims, wherein the temperature of the dry water vapour supplied to the furnace (6) for pyrohydrolysis is between 250 and 450°C, preferably between 300 and 400°C.

9. Conversion method according to any of the preceding claims, wherein the volume flowrate of H₂ supplied to the furnace (6) is between 10 and 25 Nm³/h, in particular between 15 and 20 Nm³/h.

10. Conversion method according to any of the preceding claims, wherein the flowrate of neutral scavenging gas supplied to the reactor (4) is between 1.5 and 5 Nm³/h, the temperature of the neutral scavenging gas supplied to the reactor (4) is between 80 °C and 130 °C, and the relative pressure of the supply of neutral scavenging gas is higher than the relative pressure inside the reactor (4) and is preferably lower than 1 bar.

11. Conversion method according to any of the preceding claims, comprising the supply of gaseous UF₆ to the reactor (4) from an emission device (82) comprising at least one heating chamber (86), the or each heating chamber (86) receiving a reservoir (84) of UF₆ in the solid state and heating the same to generate UF₆ in the gaseous state, and a supply circuit (87) configured to supply the reactor (4) from the or each heating chamber (86).

12. Conversion method according to claim 11, wherein the emission device (82) comprises at least two heating chambers (86), the supply circuit (87) being configured to supply the reactor (4) sequentially from the heating chambers (86), passing from a current heating chamber (86) to a following heating chamber (86) when the reservoir (84) received in said current heating chamber (86) is no longer sufficiently full.

13. Conversion method according to claim 12, wherein the supply to the reactor (4) from the following heating chamber (86) starts before ceasing of the supply to the reactor (4) from the current heating chamber (86), so that the supply to the reactor (4) continues simultaneously from both heating chambers (86) for a period of time.

14. Conversion method according to any of claims 11 to 13, wherein the supply circuit (87) comprises a pump (90) associated with the or each heating chamber (86) to force circulation of UF₆ from the reservoir (84) received in the heating chamber (86) towards the reactor (4), the or each pump (90) preferably being a positive displacement pump and more preferably a positive displacement pump with bellows.

15. Conversion method according to claim 14, wherein the supply circuit (87) comprises a flowrate regulating valve (88) associated with the or each heating chamber (86) and bypassing the pump (90) associated with the heating chamber (86).

16. Conversion installation of uranium hexafluoride, UF₆, to uranium dioxide, UO₂, the conversion installation comprising:
- a reactor (4) for hydrolysis of UF₆ to a powder of uranium oxyfluoride, UO₂F₂, by reaction between gaseous UF₆ and dry water vapour injected into the reactor (4);
- a furnace (6) for pyrohydrolysis of the UO₂F₂ powder to a powder of UO₂ by reaction of the UO₂F₂ powder with dry water vapour and hydrogen gas, H₂, injected into the furnace (6); and
- a device (8) supplying the reactor (4) and furnace (6) with reactive gases and neutral scavenging gas,
**characterized in that** the conversion installation id configured to implement a method according to any of the preceding claims.

17. Conversion installation according to claim 16, comprising an emission device (82) to supply the reactor (4) with UF₆, the emission device (82) comprising at least one heating chamber (86), the or each heating chamber (86) being configured to receive a reservoir (84) of UF₆ in the solid state and to heat the same to generate UF₆ in the gaseous state, and a supply circuit (87) configured to supply the reactor (4) from the or each heating chamber (86).
